# EUROPEAN PATENT APPLICATION

(11) **EP 1 333 394 A1**
(43) Date of publication of application: **06.08.2003**
(21) Application number: 01908226.2
(22) Date of filing: 02.03.2001
(51) Int. Cl.: G06F 17/60, G06F 17/30

(54) **SYSTEM AND METHOD FOR DETERMINING OBJECT TO WHICH ADVERTISEMENT IS PROVIDED**

(30) Priority: 07.11.2000 JP 2000338718
(71) Applicant: FUJITSU LIMITED, Kawasaki-shi, Kanagawa 211-8588 (JP)
(72) Inventor: NAKAMURA, Kenji c/o FUJITSU LIMITED, Kawasaki-shi, Kanagawa 211-8588 (JP)
(74) Representative: Sunderland, James Harry
(86) International application number: JP0101597
(87) International publication number: WO02039336

(57) **Abstract**

An object of the invention is to enable an advertiser to search for an advertisement provision destination, which meets a budget condition and is expected to have a higher effect. The invention includes a step of receiving information (for example, a budget amount, the number of times) concerning an advertisement budget condition from an advertiser terminal, a counting step of counting the number of substantial users for each advertisement provision candidate and storing it in a storage device, and a step of extracting the advertisement provision candidates in descending order of the number of the substantial users within the range of the advertisement budget condition obtained and transmitting them to the advertiser terminal. For example, the activity state of an organization is grasped by counting the number of persons (substantial users) substantially using services, such as a homepage, a bulletin board, or a mailing list of the advertisement provision candidate as the organization where persons having the same interests gather together, and an advertisement is provided to an organization with a lively activity within a budget condition. By this, it becomes possible to carry out efficient and effective advertisement provision.

## Description

### [Technical Field]

The present invention relates to an advertisement delivery technique in a network. Incidentally, in this specification, the term "advertisement" includes provision of mere information.

### [Background Technology]

Recently, in the Internet, an advertisement is widely made in such a form that a banner advertisement is put on a homepage, and when the banner advertisement is clicked, the transition to a Web page concerning an advertisement object is carried out. Besides, an e-mail containing an advertisement is also delivered.

### [Summary of the Invention]

Although advertisement is very efficient if it is delivered to a person who takes an interest in the information of the advertisement object, it is very difficult to timely provide an advertisement in accordance with diversified personal interests. Besides, a user himself or herself often does not grasp the needs. Advertisement provided in the Internet at present is one of the mass media, and cost effectiveness is hard for an advertiser to grasp.

An object of the present invention is therefore to provide a technique to enable an advertiser to search for a destination of advertisement provision, which meets a budget condition and is expected to have a higher effect.

An advertisement destination determining processing method of the present invention comprises a step of receiving information concerning an advertisement budget condition (for example, a budget amount, the number of times, or a period) from an advertiser terminal; a counting step of counting the number of substantial users for each candidate of advertisement provision destinations and storing it in a storage device; and a step of extracting candidates of the advertisement provision destinations in descending order of the number of the substantial users within the range of the advertisement budget condition obtained and transmitting them to the advertiser terminal.

For example, as described in the embodiment, by counting the number of persons (substantial users) substantially using services, such as a homepage, a bulletin board, or a mailing list of an advertisement provision destination candidate as an organization where persons having the same interests gather together, the activity states of the organizations are grasped and an advertisement is provided to the organization(s) with a lively activity within a budget condition. By this, it becomes possible to carry out efficient and effective advertisement provision.

Incidentally, a search condition concerning the property of the advertisement provision destination candidate may be received from the advertiser terminal, and on the basis of the search condition (for example, the category of an organization) concerning the property of the advertisement provision destination candidate, the advertisement provision destination candidates may be restricted.

Further, a condition (for example, information concerning gender, an age group) concerning a counting range of the number of substantial users in the organization may be received from the advertiser terminal, and the number of substantial users conforming with the condition concerning the counting range may be counted for each of the advertisement provision destination candidates in the aforementioned counting step.

The advertiser terminal transmits information concerning an advertisement budget condition to a server, receives information of the advertisement provision destination candidates extracted in descending order of the number of the substantial users within the range of the advertisement budget condition from the server, and displays it on a display device.

Incidentally, the advertisement destination determining processing method as described above can be implemented by a combination of a computer and a program, and the program is stored in, for example, a storage medium or a storage device such as a floppy disk, a CD-ROM, a magneto-optical disk, a semiconductor memory or a hard disk. Intermediate data during the processing is stored in a storage device such as a main memory of a computer.

### [Brief description of the drawings]

Fig. 1 is a drawing showing the outline of a system of an embodiment of the present invention;
Fig. 2 is a flowchart showing a processing flow for organization registration;
Fig. 3 is a drawing showing an example of an organization table;
Fig. 4 is a drawing showing an example of a member table;
Fig. 5 is a flowchart showing a processing flow for member registration;
Fig. 6 is a drawing showing a processing flow for information provision to a member by an organization secretariat terminal;
Fig. 7 is a drawing showing a processing flow (No. 1) for determining advertisement provision destinations;
Fig. 8 is a drawing showing an example of an information provider table;
Fig. 9 is a drawing showing an example of a search condition input screen for mail advertisement;
Fig. 10 is a drawing showing an example of a search condition input screen for banner advertisement;
Fig. 11 is a drawing showing an example of a provision information table;
Fig. 12 is a drawing showing a processing flow (No. 2) for determining advertisement provision destinations;
Fig. 13 is a flowchart of a processing for grasping the number of substantial users;
Fig. 14 is a flowchart of a provision destination extracting processing;
Fig. 15 is a drawing showing a specific example for explaining provision destination extraction;
Fig. 16 is a drawing showing an example of a list screen of mail advertisement delivery destinations;
Fig. 17 is a drawing showing an example of a list screen of banner advertisement placement destination; and
Fig. 18 is a drawing showing a processing flow (No. 3) for determining advertisement provision destinations.

### [Best mode for carrying out the invention]

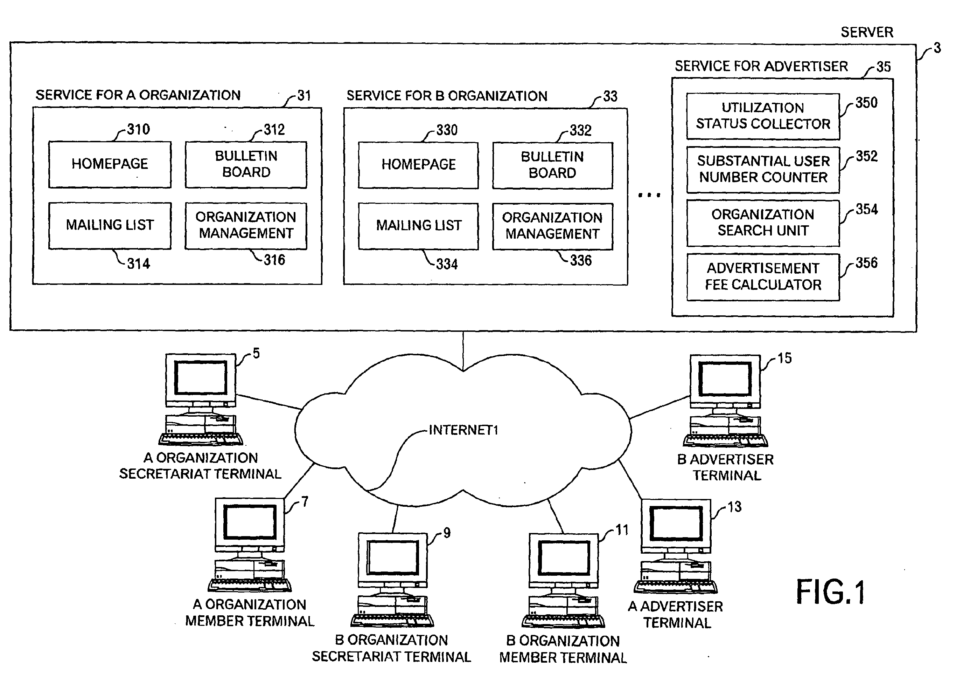

A system outline figure of one embodiment of the present invention is shown in Fig. 1. The Internet 1 as a computer network is connected with a server 3 for executing a main processing in this embodiment and having a Web server function and a mail server function, an A organization secretariat terminal 5 operated by a person in charge of the affairs of an A organization and having a Web browser function, an A organization member terminal 7 operated by a member of the A organization and having the Web browser function, a B organization secretariat terminal 9 operated by a person in charge of the affairs of a B organization and having the Web browser function, a B organization member terminal 11 operated by a member of the B organization and having the Web browser function, an A advertiser terminal 13 operated by a staff member of an A advertiser and having the Web browser function, and a B advertiser terminal 15 operated by a staff member of a B advertiser and having the Web browser function.

In Fig. 1, although only the two organizations are shown, the number of organizations is not limited to two, and the number is not limited. Similarly, although only one member terminal is shown for each organization, the number is not limited. The same applies to the advertiser terminal, and the number of advertiser terminals is not limited. The server 3 is also not limited to one, and plural servers may realize functions described below. The terminal may be a personal computer or may be a portable terminal or a cellular phone.

The server 3 provides, as a service 31 for the A organization, a homepage 310 for providing information concerning the A organization to members or the like, a bulletin board 312 as a place where the members of the A organization make arguments, a mailing list 314 for performing information delivery by mail, and an organization management function 316 for managing the organization members or the like. Similarly, the server provides, as a service 33 for the B organization, a homepage 330 for providing information concerning the B organization to members or the like, a bulletin board 332 as a place where the members of the B organization make arguments, a mailing list 334 for performing information delivery by mail, and an organization management function 336 for managing the organization members or the like. The above-described services for the organizations are mere examples, and other services, for example, a shopping function can also be provided.

Besides, for a service 35 for an advertiser, the server includes a utilization status collector 350 for collecting information concerning the utilization status of the organization and the organization members, for example, accessing persons and the number of accesses to the homepage, speakers and the number of utterances on the bulletin board, and senders and the number of times of sending of the mailing list, a substantial user number counter 352 for counting the substantial users obtained by counting the number of accesses for each user, for example, for each organization, each gender in the organization, and/or each age group in the organization, an organization search unit 354 for searching advertisement provision destinations, and an advertisement fee calculator 356 for calculating an advertisement fee.

The outline of the business will be described with reference to Fig. 1. An administrator of the server 3 provides each organization with the establishment of a homepage, the use of a bulletin board, the use of a mailing list, and organization management functions without a fee or at a low cost, and prompts the organization to register. Instead of that, the administrator of the server 3 tracks the accessing status of the homepage, the utilization status of the bulletin board, the utilization status of the mailing list, and the like for each member of each organization, and records them. Each member is enabled to receive a service after login using an ID and a password, and by this, the utilization status as described above is recorded. On the other hand, it presents the advertiser with the registered contents allowed by each organization, for example, the category of the organization, and makes a pay delivery service of a banner advertisement on a homepage or a bulletin board, and a mail advertisement using a mailing list. The advertisement provision destination organizations can be extracted in accordance with a procedure described below so that the cost effectiveness of the advertiser is raised.

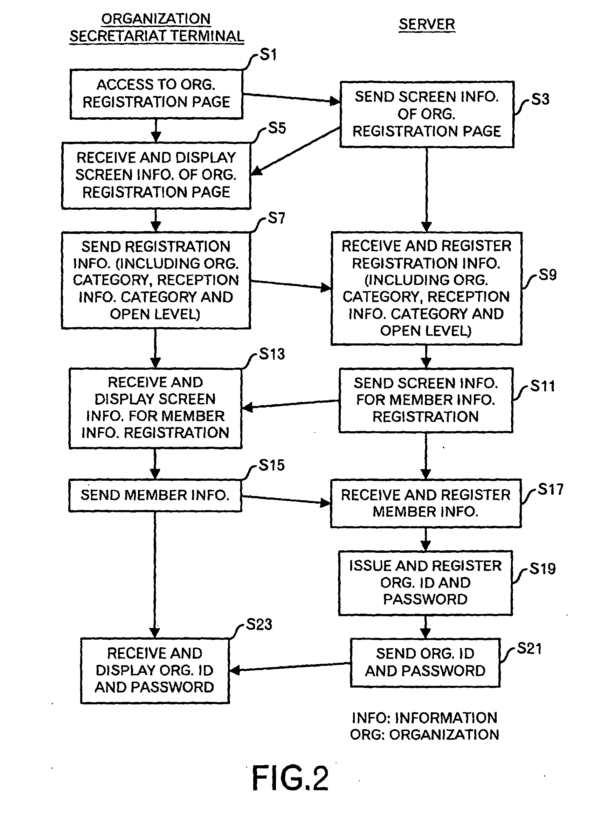

Next, the processing flow of the system shown in Fig. 1 will be described by using Figs. 2 to 18. First, an organization registration processing (for example, registration processing of the A organization) will be described by using Fig. 2. This organization registration processing is a part of the organization management functions 316 or 336. First, the person in charge of the affairs of the A organization causes the A organization secretariat terminal 5 to access an organization registration homepage (step S1). In response to this, the server 3 transmits screen information (for example, an HTML (Hyper Text Markup Language) file and image files if images are included) of an organization registration page to the A organization secretariat terminal 5 (step S3). The A organization secretariat terminal 5 receives the screen information of the organization registration page from the server 3, and displays it on a display device (step S5). On the organization registration page, there are provided input columns of information, such as an organization name, a representative name, a contact address (address, telephone number, FAX number, e-mail address), activity content, an organization category, a member structure (the total number of members, the numbers of men and women, an age group, etc.), an information open level, and a reception information category.

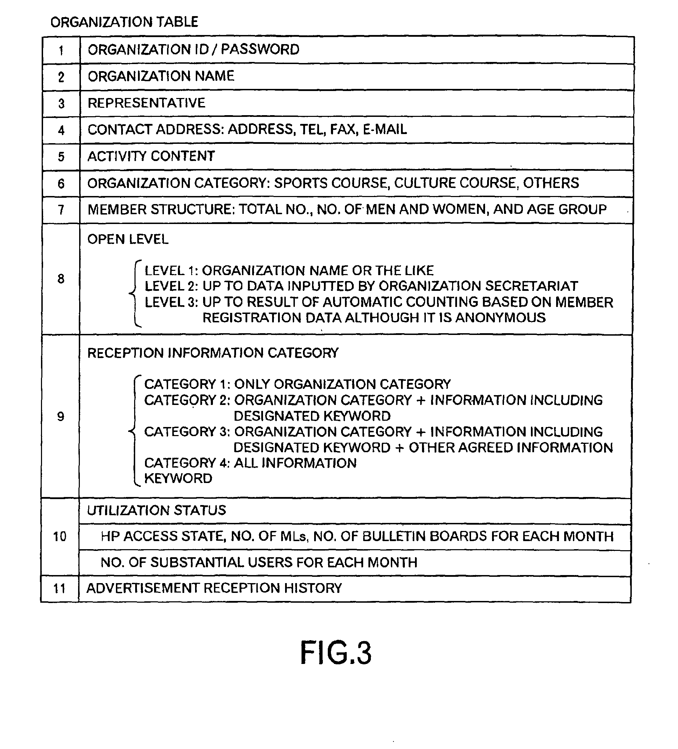

The person in charge of the affairs of the A organization operates the A organization secretariat terminal 5 to input registration information, and the A organization secretariat terminal 5 transmits the registration information (including the organization category, information open level, reception information category, etc.) to the server 3 (step S7). The server 3 receives the registration information from the A organization secretariat terminal 5, and registers it in an organization table (Fig. 3) (step S9). An example of the organization table is shown in Fig. 3. In the example of Fig. 3, an organization ID and a password, an organization name, a representative, a contact address (address, telephone number, FAX number, e-mail address), activity content, an organization category (sports course such as baseball, soccer, tennis, martial arts, ping-pong, mountaineering or dance, culture course such as play, movie, the game of go, animation, music, computer, game, handicraft, astronomy or fine art, and the others such as fan club of a personality), a member structure (the total number, the numbers of men and women, age group, etc.), an open level, a reception information category and a designated keyword, a utilization status, and an advertisement reception history are registered. The organization ID and the password are issued later and are registered.

With respect to the open level, for example, among level 1 in which the organization name or the like is opened to the public, level 2 in which information up to data inputted by the organization secretariat is opened to the public, and level 3 in which information up to the result of automatic counting on the basis of the member registration data is opened to the public although it is anonymous, one of them is designated. With respect to the reception information category, for example, among category 1 signifying information up to the organization category, category 2 signifying the organization category and the information including the designated keyword, category 3 signifying the organization category, the information including the designated keyword and other agreed information, and category 4 signifying all the information, one of them is designated. With respect to the utilization status, for example, a homepage (HP) access state for each month, the number of mailing lists (ML), the number of bulletin boards, and the number of substantial users for each month (the number of substantial accesses for each month) are stored. Incidentally, with respect to the number of substantial users for each month, for example, counting of each segment, such as each age group or each of the male and the female may also be performed, and a counting value for each segment may be registered.

Further, information of the mailing list and information concerning the bulletin board may be stored in the organization table.

Next, the server 3 transmits screen information for the member information registration to the A organization secretariat terminal 5 (step S11). In response to this, the A organization secretariat terminal 5 receives the screen information for member information registration, and displays it on the display device (step S13). For example, the member information registration screen is a screen for transmitting a file of a specified form, such as a CSV (Comma Separated Value) file, including the member information, to the server 3, or a screen for inputting information of individual members. Incidentally, with respect to registration of the individual members, each member may perform the registration in compliance with a processing flow as described later, and the secretariat may not perform the registration. Here, the person in charge of the affairs of the A organization operates the A organization secretariat terminal 5 to input the member information, and the A organization secretariat terminal 5 transmits it to the server 3 (step S15).

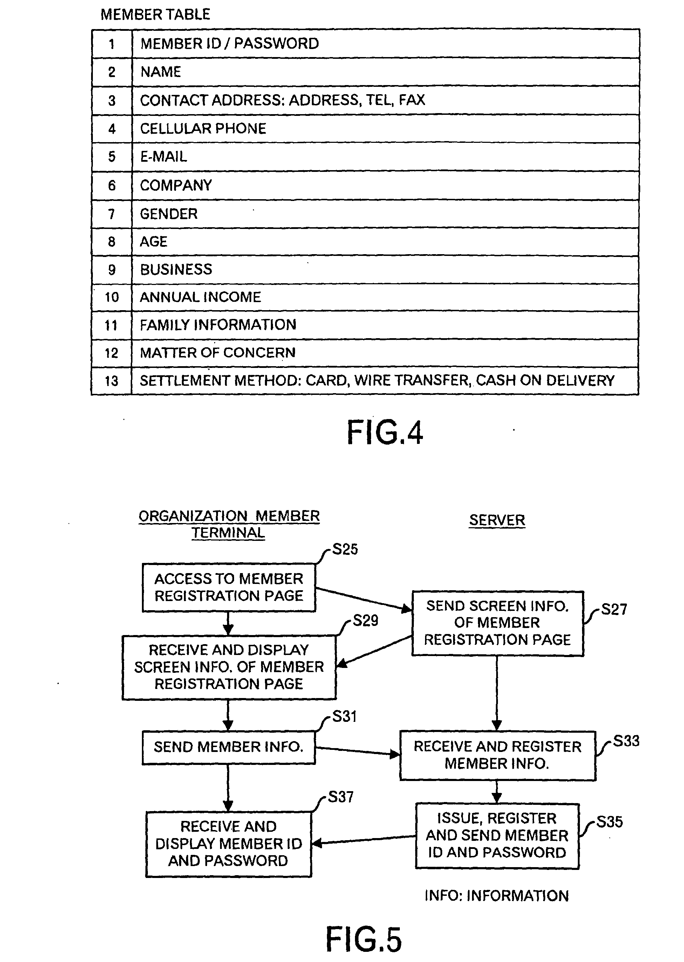

The server 3 receives the member information from the A organization secretariat terminal 5, and registers it in a member table (Fig. 4) (step S17). Fig. 4 shows an example of the member table. In the example of Fig. 4, for each member, a member ID and a password, a name, a contact address (address, telephone number, FAX number), a cellular phone number, an e-mail address, a company name, a gender, an age, business, an annual income, family information, a matter of concern, and a settlement method (card, wire transfer, cash on delivery) are registered. Incidentally, all of these kinds of information are not necessarily required to be registered, and the information transmitted from the A organization secretariat terminal 5 may be part of these or all of these. The member ID and the password may be issued by the server 3.

The server 3 issues the organization ID and the password after the step S17, and registers them in the organization table (Fig. 3) (step S19). The organization ID and the password become the ID and the password used by the A organization secretariat. The organization ID and the password may be issued after the step S9 and may be registered in the organization table. Then, the server 3 transmits the issued organization ID and the password to the A organization secretariat terminal 5 (step S21). Then, the A organization secretariat terminal 5 receives the organization ID and the password and displays them on the display device (step S23). The person in charge of the affairs of the A organization sees the display device, records the ID and the password, and uses them in the case where they are later required for changing the setting of the organization or the member of the organization, for uploading a file for the homepage or the like. Incidentally, with respect to the ID and the password, those that are determined by the person himself or herself in charge of the affairs of the organization may be registered. Besides, only the password may be issued by the server 3.

Thus, the person in charge of the affairs of the organization can easily register the information in the server 3, and various services can be received.

In the case where the organization secretariat does not perform any registration of the members in the processing flow shown in Fig. 2 or in the case where he or she registers only part of information, it is necessary that the individual members operate the organization member terminal to perform the member registration. A processing flow at the time when the individual members (here, members of the A organization) perform the member registration will be described by using Fig. 5. The member registration processing is part of the organization management functions 316 or 336. First, a member causes the A organization member terminal 7 to access a member registration page of the A organization (step S25). The server 3 transmits screen information of the member registration page to the A organization member terminal 7 (step S27). The A organization member terminal 7 receives the screen information of the member registration page from the server 3 and displays it on the display device (step S29). For example, each item (except for the member ID and the password) of the member table shown in Fig. 4 is indicated, and the input column corresponding to that is provided. Incidentally, although new registration is considered here, in the case where the organization secretariat registers part of the member information, after an authentication processing is executed, the member registration page in a state where the already registered contents are inputted in the input columns is displayed in the A organization member terminal 7.

The member inputs the member information, and the A organization member terminal 7 transmits the inputted member information to the server 3 (step S31). The server 3 receives the member information from the A organization member terminal 7, and registers it in the member table (Fig. 4) (step S33). Then, in the case of new registration, a member ID and a password are issued and are transmitted to the A organization member terminal 7 (step S35). The A organization member terminal 7 receives the member ID and the password from the server 3 and displays them on the display device (step S37). The member records the displayed member ID and the password, and when receiving the service of the server 3, the member uses the member ID and the password to log in. Although the member ID and the password are issued by the server 3, the member can register them in the form where they are included in the member information. In such a case, the processing subsequent to the step S35 is omitted. Further, the member ID can be set to a member ID already allocated in the organization. Only the password may be issued by the server 3.

Thus, the A organization and the member having been registered can receive the services of the server 3, such as the homepage 310, the bulletin board 312, the mailing list 314 and the organization management function 316.

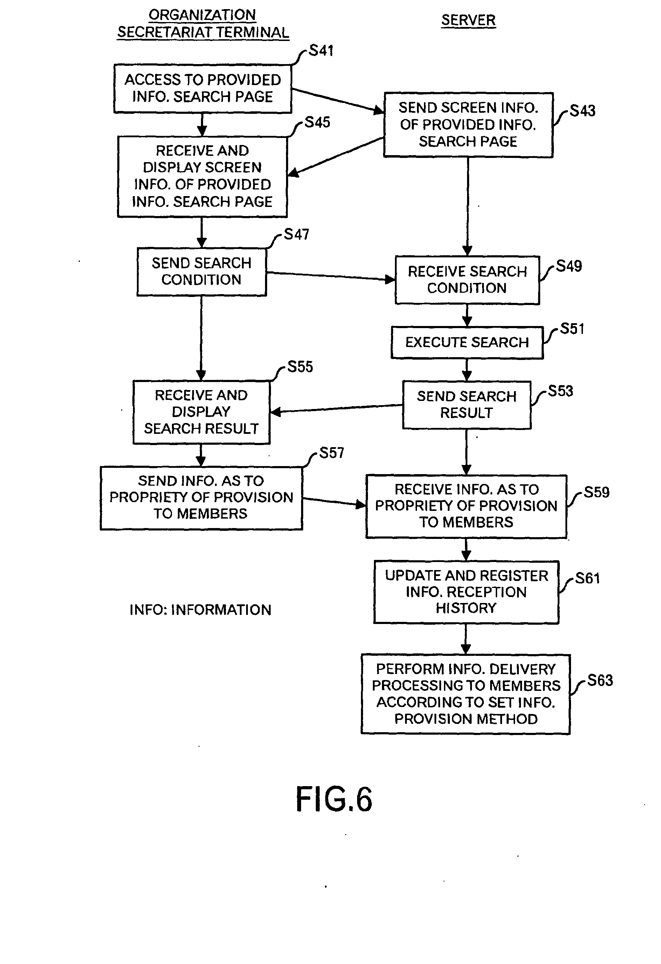

Next, a processing flow in a case where the organization secretariat receives the provision of information registered by the advertiser or the like will be described by using Fig. 6. The person in charge of the affairs of the A organization causes the A organization secretariat terminal 5 to access a provided information search page (step S41). Incidentally, it is assumed that the authentication processing is completed by the organization ID and the password. In response to this, the server 3 transmits screen information of the provided information search page to the A organization secretariat terminal 5 (step S43). The A organization secretariat terminal 5 receives the screen information of the provided information search page from the server 3 and displays it on the display device (step S45). The person in charge of the affairs of the A organization inputs a search condition, and the A organization secretariat terminal 5 transmits the search condition to the server 3 (step S47). The server 3 receives the search condition from the A organization secretariat terminal 5 (step S49), and executes the search for a provided information table (described later in detail) on the basis of the search condition (step S51).

The server 3 uses the search result at the step S51, generates screen information for the search result display, and transmits it to the A organization secretariat terminal 5 (step S53). The A organization secretariat terminal 5 receives the screen information for the search result display, and displays it on the display device (step S55). The person in charge of the affairs of the organization sees this display screen, and selects information to be provided to the members. In the case where plural kinds of information are included in the search result, the propriety of provision as to each kinds of information is inputted. The A organization secretariat terminal 5 transmits the information as to the propriety of provision to the members to the server 3 (step S57). When the server 3 receives the information as to the propriety of provision to the members from the A organization secretariat terminal 5 (step S59), if there is information which can be provided, the server updates and registers an information (advertisement) reception history (organization table (Fig. 3)) (step S61). Here, the information as to what advertisement and information has been accepted is registered, and according to circumstances, when an advertisement provision destination is determined, the advertiser or the like refers to the information. Incidentally, the information is not limited to an advertisement. For example, it includes publicity of an event or the like. Incidentally, when the response from the A organization secretariat terminal 5 is only provision disapproval (disapproval of information reception), step S61 and step S63 are skipped.

With respect to the information of provision approval, the server 3 carries out an information delivery processing to the members of the A organization in accordance with an information provision method (method of, for example, mail or banner advertisement) set in the information (step S63).

If doing so, the organization is not a mere receiver of information, but is enabled to search information appearing to be necessary for the organization in accordance with the judgment of the organization secretariat, and actively provide it to the organization members. In the organization, on the bulletin board (meeting room) or the like, arguments as to the information (or a commodity or a service as an advertisement object) provided in this way are enabled. The advertiser can obtain an unexpected advertisement effect.

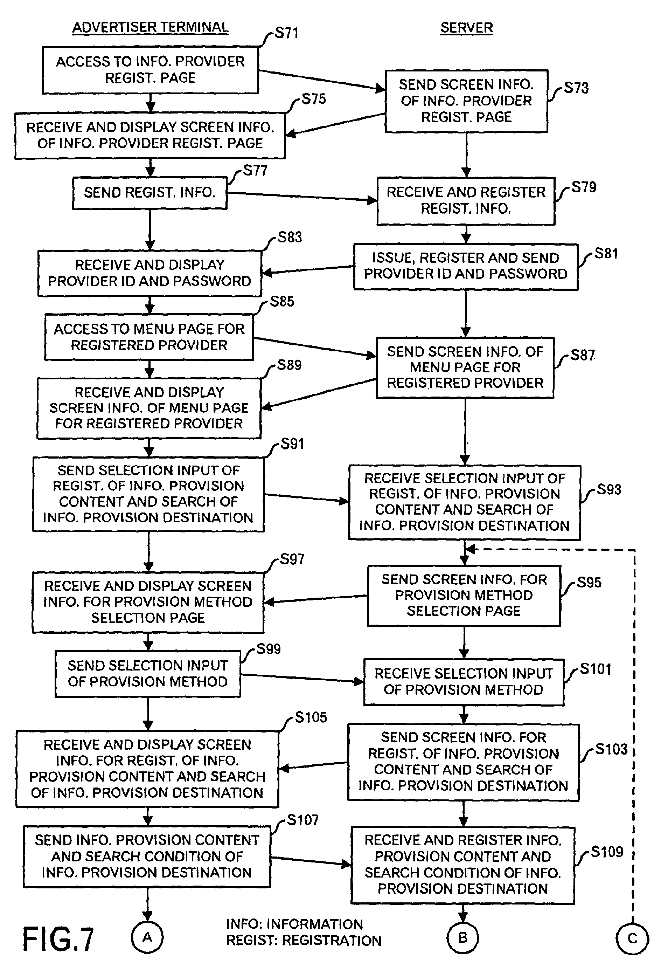

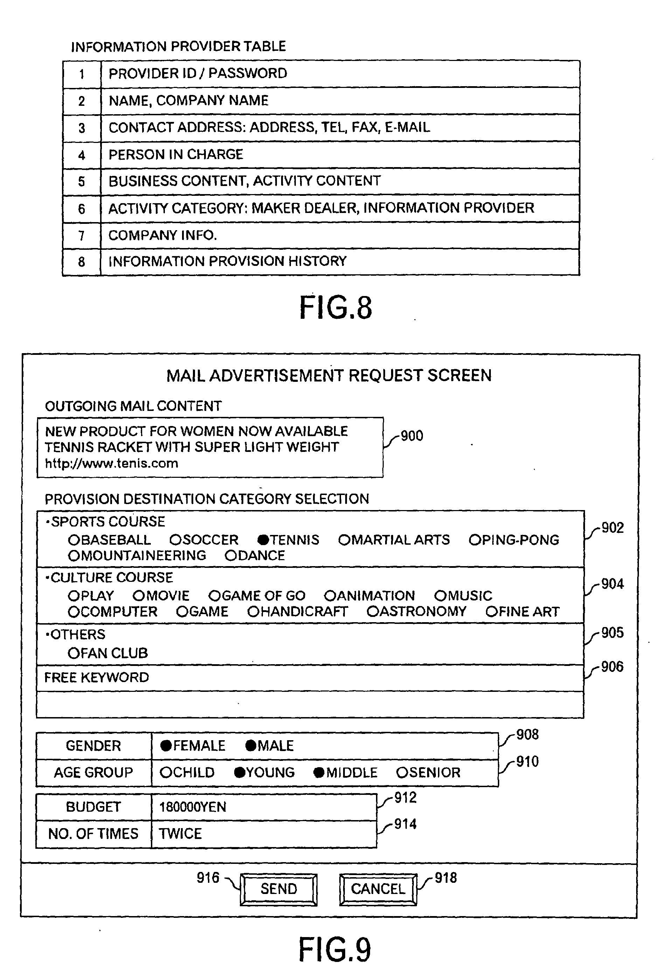

Next, a processing flow in which the advertiser uses the server 3 to search an advertisement provision destination meeting a condition and to deliver an advertisement, will be described by using Figs. 7 to 18. Here, the case of the staff member of the A advertiser will be described. The staff member of the A advertiser causes the A advertiser terminal 13 to access an information provider registration page (step S71). In response to this, the server 3 transmits screen information of the information provider registration page to the A advertiser terminal 13 (step S73). The A advertiser terminal 13 receives the screen information of the information provider registration page from the server 3 and displays it on the display device (step S75). On the information provider registration page, input columns of, for example, a name or a company name, a contact address (address, telephone number, FAX number, e-mail address, etc.), a name of a person in charge, business content or activity content, an activity category (maker, dealer, or information provider, etc.), company information and the like are provided, and the staff member of the A advertiser inputs information in the input columns. Then, he or she causes the A advertiser terminal 13 to transmit the inputted registration information to the server 3 (step S77). The server 3 receives the registration information from the A advertiser terminal 13, and registers it in an information provider table (Fig. 8) (step 79).

Fig. 8 shows an example of the information provider table. In the example of Fig. 8, a provider ID and a password, a name or a company name, a contact address (address, telephone number, FAX number, e-mail address, etc.), a name of the person in charge, business content or activity content, an activity category (maker, dealer, or information provider, etc.), company information, an information provision history describer later, and the like are registered.

The server 3 issues the provider ID and the password, registers them in the information provider table (Fig. 8), and transmits them to the A advertiser terminal 13 (step S81). The A advertiser terminal 13 receives the provider ID and the password from the server 3, and displays them on the display device (step S83). The staff member of the A advertiser records the provider ID and the password. Then, he or she operates the A advertiser terminal 13 and causes it to access a registered provider menu page (step S85). In response to the access, the server 3 transmits screen information of the registered provider menu page to the A advertiser terminal 13 (step S87). The A advertiser terminal 13 receives the screen information of the registered provider menu page from the server 3 and displays it on the display device (step S89).

The registered provider menu page includes, for example, an item of registration of information provision content and search of information provision destination, and an item of organization list by categories. Here, the staff member of the A advertiser selects the item of the registration of the information provision content and the search of the information provision destination, and the A advertiser terminal 13 transmits the selection input of the registration of the information provision content and the search of the information provision destination to the server 3 (step S91). The server 3 receives the selection input of the registration of the information provision content and the search of the information provision destination from the A advertiser terminal 13 (step S93), and transmits screen information of a provision method selection page to the A advertiser terminal 13 (step S95). The A advertiser terminal 13 receives the screen information of the provision method selection page from the server 3, and displays it on the display device (step S97). The provision method selection page includes an option of, for example, a banner advertisement and a mail advertisement.

The staff member of the A advertiser selects a provision method of an advertisement at this time, and the A advertiser terminal 13 transmits the selection input of the provision method to the server 3 (step S99). When the server 3 receives the selection input of the provision method from the A advertiser terminal (step S101), it transmits screen information for the registration of the information provision content and the search of the information provision destination in accordance with the provision method to the A advertiser terminal 13 (step S103). The A advertiser terminal 13 receives the screen information for the registration of the information provision content and the search of the information provision destination from the server 3, and displays it on the display device (step S105). For example, Fig. 9 shows an example of a screen displayed in the case where the mail advertisement (mail information provision) is selected.

In Fig. 9, there are provided an outgoing mail content input column 900 for inputting outgoing mail content (including URL (Uniform Resource Locator) of a link destination), a sports course category selection column 902, a culture course category selection column 904, and the other category selection column 905, which are included in a provision destination category selection column for narrowing organizations, a free keyword column 906 for inputting a free keyword for narrowing the organizations, a gender selection column 908 and an age group selection column 910, to define a counting object range of the number of substantial users in a target range of an advertisement, a budget amount input column 912 of a budget condition, and an input column 914 of the number of times. Incidentally, a column for inputting a condition as to an information open level of the organization may be provided, and designation may be made to an organization, which has, for example, level 2.

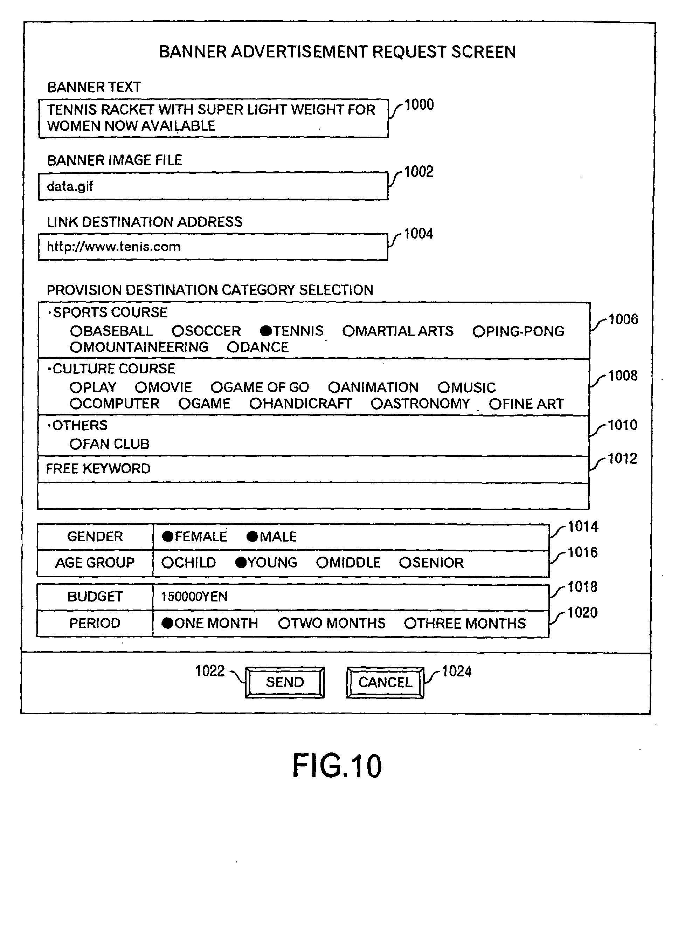

Fig. 10 shows a screen example displayed in the case where the banner advertisement (banner information provision) is selected. In Fig. 10, there are provided a column 1000 for inputting text content contained in the banner, a column 1002 for inputting a file name of a banner image, an input column 1004 of a link destination URL (address) in the case where the banner advertisement is clicked, a sports course category selection column 1006, a culture course category selection column 1008, and other category selection column 1010, which are included in a provision destination category selection column for narrowing organizations, a free keyword column 1012 for inputting a free keyword for narrowing the organizations, a gender selection column 1014 and an age group selection column 1016, to define a counting object range of the number of substantial users in a target range of the advertisement, a budget amount input column 1018 of a budget condition, and a period selection column 1020. Incidentally, a column for inputting a condition as to an information open level of the organization may be provided, and designation may be set to an organization, which has, for example, level 3.

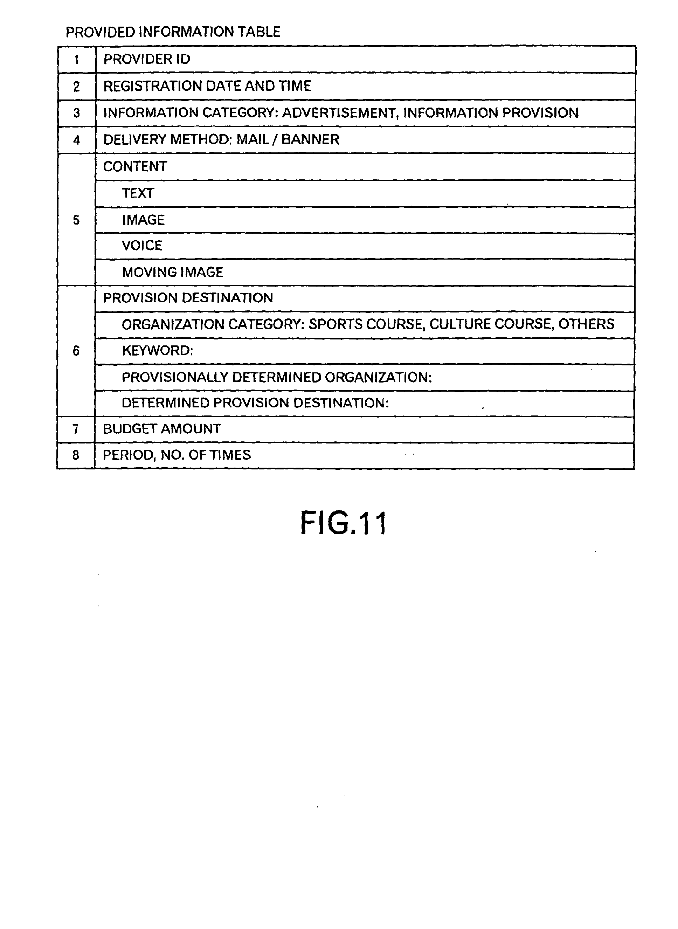

The information inputted by the staff member of the A advertiser in accordance with Fig. 9 or Fig. 10 as stated above and files to be used are transmitted as the information provision content and the search condition of the information provision destination to the server 3 by the A advertiser terminal 13 (step S107). The server 3 receives the information provision content and the search condition of the information provision destination from the A advertiser terminal 13, and registers them in a provided information table (Fig. 11) (step S109). Fig. 11 shows an example of the provided information table. In the example of Fig. 11, there are registered a provider ID, a registration date and time, an information category (advertisement or information provision. Registration is arbitrary.), a delivery method (mail or banner), content (file names of a text, an image, a sound, a moving image, etc.), a search condition (an organization category, a keyword, a member structure (gender, age group, etc.)) concerning a provision destination, a provisionally determined organization, a determined provision destination, a budget amount, and a period or the number of times, etc. Incidentally, with respect to the provisionally determined organization of the advertisement etc., a search result described later or the like is recorded. An organization for which the delivery of an advertisement or the like is determined is registered as the determined provision destination.

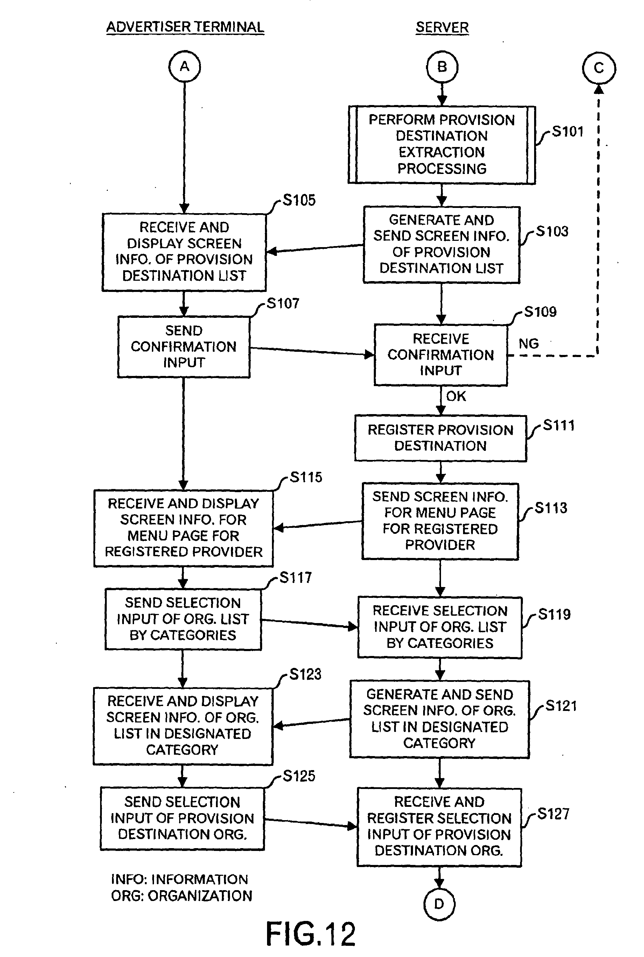

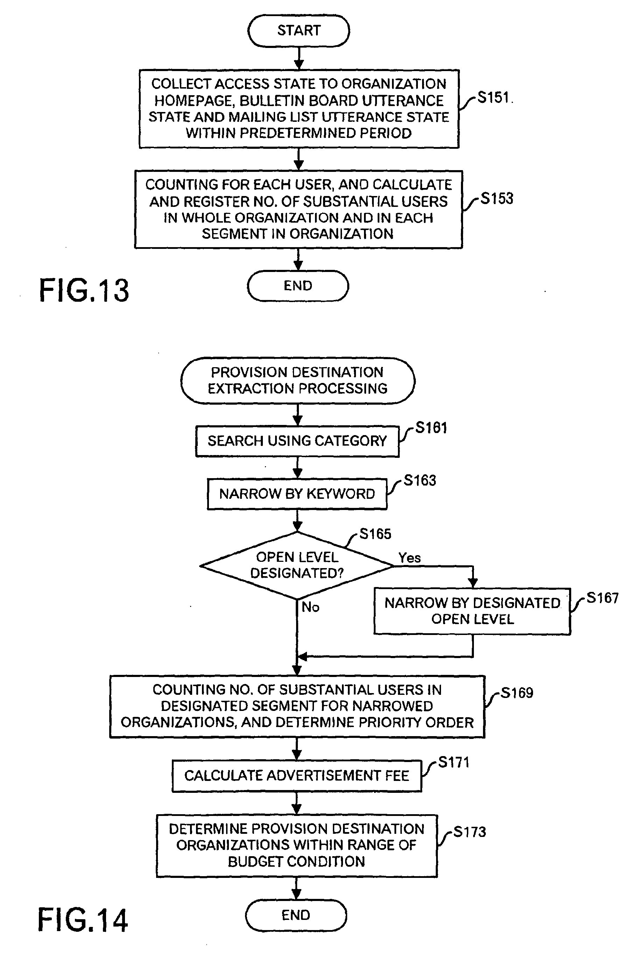

The processing proceeds to Fig. 12 through terminal A and B. The server 3 executes a provision destination extraction processing (step S101). The provision destination extraction processing will be described by using Figs. 13 and 14. Incidentally, the processing of Fig. 13 is a processing, which is executed by the utilization status collector 350 and the substantial user number counter 352 in the background, while each member of each organization uses the server 3. In Fig. 13, the utilization status collector 350 collects an access state to an organization homepage, a bulletin board utterance state, and a mailing list utterance state within a predetermined period (step S151). That is, a record is made as to who uses which service. Then, the substantial user number counter 352 counts for each user, calculates the number of substantial users in the whole organization and in each segment of the organization, and registers them in the utilization status registration column of the organization table (Fig. 3) (step S153).

Then, a provision destination extraction processing by the organization search unit (Fig. 14) is performed. In this embodiment, first, a search is performed using a category (step S161). For example, in the examples of Fig. 9 and Fig. 10, tennis is designated as a search category, and organizations in which tennis is designated in the category column of the organization table are extracted. Next, narrowing is performed by a keyword (step S163). Although not inputted in the examples of Fig. 9 and Fig. 10, narrowing is performed using a word inputted as a free keyword. Further, it is judged whether an open level is designated in the search condition (step S165). For an advertiser, since an organization providing many pieces of information to the advertiser side is preferable as an advertisement provision destination, the designation of the open level may be included in the search condition. In case the designation of the open level is included in the search condition, narrowing is performed using the designated open level (step S167). For example, it is judged whether the open level in the open level column of the organization table is the designated open level or a level higher than the designated open level.

With respect to the organizations narrowed in this way, the number of substantial users in the designated segment is counted, and priority order is determined (step S169). In the example of Fig. 9, the segment is designated in which the gender is "male and female", and the age group is "young and middle", and in the example of Fig. 10, the segment is designated in which the gender is "male and female", and the age group is "young". Accordingly, the number of substantial users is counted in this range. Then, the advertisement fee calculator 356 is further used to calculate an advertisement fee for each organization (step S171), and provision destination organizations are determined within the range of the budget condition (step S173).

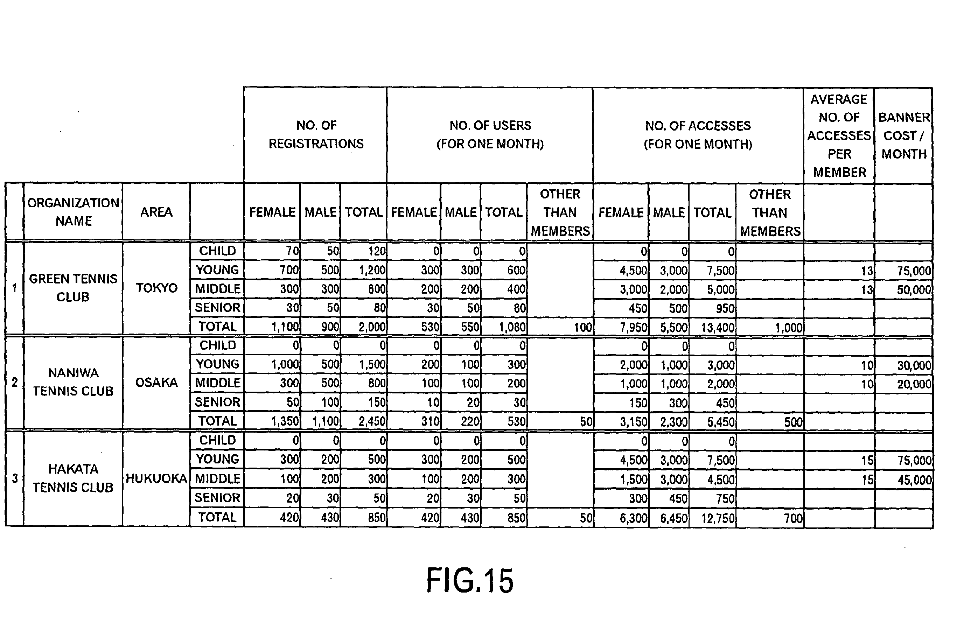

Fig. 15 shows a specific example. Here, it is assumed that up to the step S167, three organizations of Green tennis club, Naniwa tennis club, and Hakata tennis club are extracted. With respect to the registration number in the segments (male and female, young and middle) designated in Fig. 9, the order is such that Naniwa tennis club is 2300 (= 1000 + 500 + 300 + 500), Green tennis club is 1800 (= 700 + 500 + 300 + 300), and Hakata tennis club is 800 (= 300 + 200 + 100 + 200). On the other hand, with respect to the number of substantial users, the order is such that Green tennis club is 1000 (300 + 300 + 200 + 200), Hakata tennis club is 800 (= 300 + 200 + 100 + 200), and Naniwa tennis club is 500 (= 200 + 100 + 100 + 100). Since it is preferable that an advertisement is delivered to an organization having a high use frequency, here, a judgment is made on the basis of the number of substantial users. Incidentally, a judgment is not made on the basis of the number of accesses, since there is also a case where only partial members frequently use, and in such a case, the number of accesses does not necessarily reflect the activity state of the organization.

In this example, an advertisement fee of mail advertisement is 50 yen per mail. In the condition of Fig. 9, since the budget condition is such that transmission is made twice in the budget amount of 180,000 yen, 1,800 mails (= 180,000/2/50) can be sent at a time. Green tennis club has 1,000 substantial users, Hakata tennis club has 800 substantial users, and the total is 1,800. Accordingly, it is understood to be appropriate that the mail advertisements are delivered to Green tennis club and Hakata tennis club.

Incidentally, since the mail advertisements are delivered using the mailing list, the mail advertisements are also actually delivered to members not meeting the condition of young and middle. In this case, the advertiser can deliver the mail advertisements to persons over the budget, and there is possibility that an advertisement effect beyond expectations is obtained.

Besides, with respect to the number of registered persons in the segment (male and female and young) designated in Fig. 10, the order is such that Green tennis club is 1,200 (= 700 + 500), Naniwa tennis club is 1,500 (= 1,000 + 500), and Hakata tennis club is 500 (= 300 + 200). On the other hand, with respect to the number of substantial users, the order is such that Green tennis club is 600 (= 300 + 300), Hakata tennis club is 500 (= 300 + 200), and Naniwa tennis club is 300 (= 200 + 100).

In Fig. 10, the banner advertisement for one month is scheduled, and in this embodiment, the unit cost is 10 yen per exposure. In this embodiment, the advertisement fee is calculated by unit cost × (the number of substantial users in the segment designated by the search condition) × (the number of accesses per substantial user in the segment designated by the search condition). Incidentally, (the number of accesses per substantial user in the segment designated by the search condition) = (the number of accesses in the segment designated by the search condition) / (the number of substantial users). Besides, in the example of Fig. 10, the budget amount is 150,000 yen.

When Fig. 15 is viewed, the number of accesses in the segment designated by the search condition of Green tennis club is 7,500, and the cost is 75,000 yen. The number of accesses in the segment designated by the search condition of Hakata tennis club is 7,500 and the cost is 75,000 yen. Since the total is 150,000 yen, in the example of Fig. 15, it is understood to be appropriate that the banner advertisements to Green tennis club and Hakata tennis club are delivered.

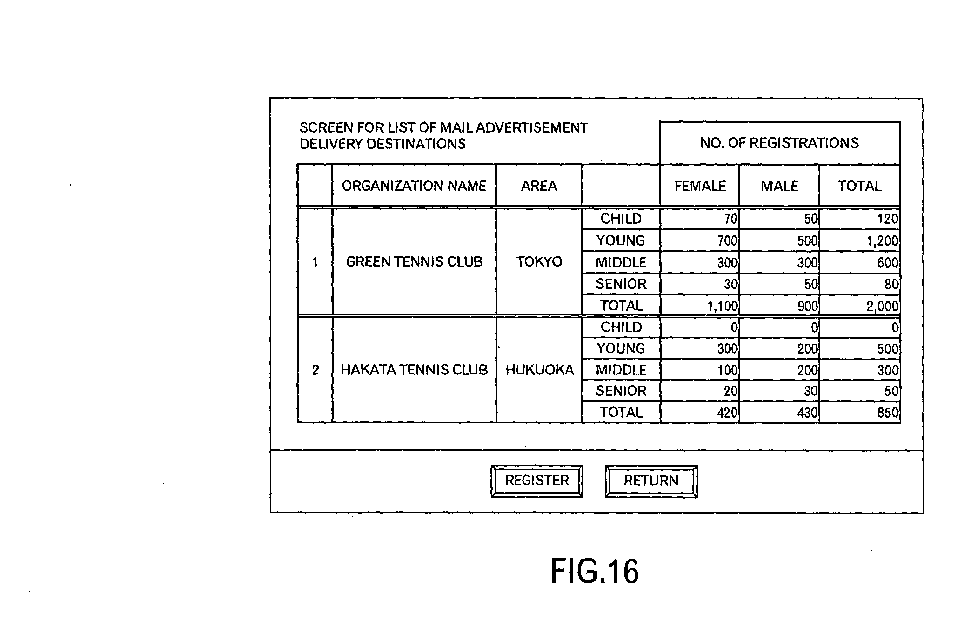

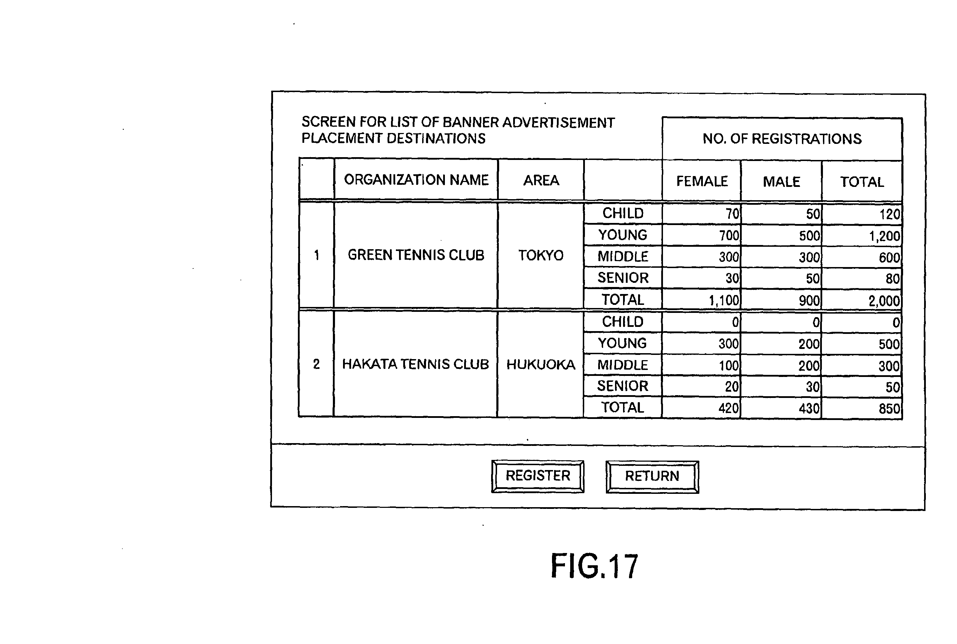

When the provision destination extraction processing is performed as shown in Fig. 14 and the provision destinations are extracted, the server 3 generates screen information of a provision destination list, and transmits it to the A advertiser terminal 13 (Fig. 12: step S103). Then, the A advertiser terminal 13 receives the screen information of the provision destination list from the server 3, and displays it on the display device (step S105). For example, the screen for the list of the mail advertisement delivery destination as shown in Fig. 16 is displayed in relation to Fig. 9. In the example of Fig. 16, although the organization name of the mail advertisement delivery destination and the number of registered persons are displayed, when the designated open level (organization table (Fig. 3)) is such a level that opening to the public is allowed, data such as the number of substantial users may be displayed. Besides, in relation to Fig. 10, the screen for the list of the banner advertisement placement destination as shown in Fig. 17 is displayed. Similarly to Fig. 16, although the organization name of the placement destination and the number of registered persons are displayed in Fig. 17, when the designated open level (organization table (Fig. 3)) is such a level that opening to the public is allowed, data such as the number of substantial users may be displayed.

The staff member of the A advertiser refers to such data and judges whether the advertisement delivery should be made. Then, he or she operates the A advertiser terminal 13 and causes the A advertiser terminal 13 to transmit the confirmation input (registration or cancel instruction) to the server 3 (step S107). The server 3 receives the confirmation input from the A advertiser terminal 13 (step S109). In case the cancel instruction has been issued, the processing returns to the step S95 of Fig. 7 through terminal C. In case the registration instruction has been issued, the provision destination is registered as a provisionally determined organization in, for example, the provision destination of the provided information table (Fig. 11) (step S111).

Besides, the server 3 transmits the screen information of the registered provider menu page to the A advertiser terminal 13 (step S113). The A advertiser terminal 13 receives the screen information of the registered provider menu page from the server 3 and displays it on the display device (step S115). Here, the staff member of the A advertiser refers to the organization list by categories and judges whether the organization of the advertisement delivery destination should be further added. Then, he or she clicks the item of the organization list by categories (including specific category designation), and causes the A advertiser terminal 13 to transmit the selection input of the organization list by categories (including specific category designation) to the server 3 (step S117). The server 3 receives the selection input of the organization list by categories (including specific category designation) from the A advertiser terminal 13 (step S119), generates screen information for the organization list of the designated category, and transmits it to the A advertiser terminal (step S121).

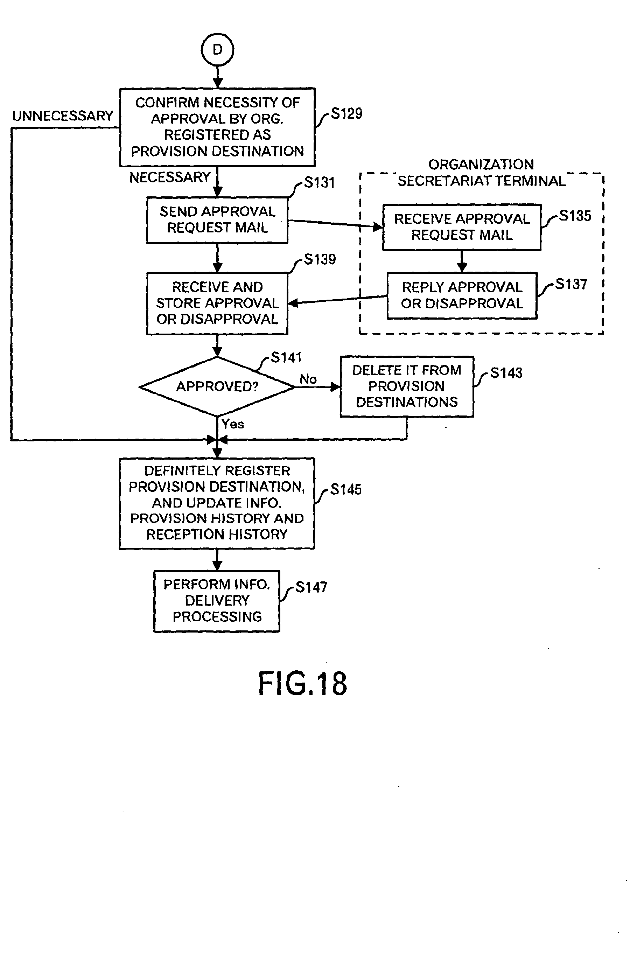

The A advertiser terminal 13 receives the screen information for the organization list of the designated category from the server 3, and displays it on the display device (step S123). The staff member of the A advertiser searches for a suitable organization other than the organizations extracted at the step S101. If a suitable organization is found, he or she selects it as the organization of the provision destination, and causes the A advertiser terminal 13 to transmit the selection input of the provision destination organization to the server 3 (step S125). The server 3 receives the selection input of the provision destination organization from the A advertiser terminal 13, and registers it as a provisionally determined organization in the provision destination of the provided information table (Fig. 11) (step S127). The processing proceeds to Fig. 18 through terminal D.

Then, with respect to the organization in which the provision destination registration has been made, it is confirmed by referring to the organization table (Fig. 3) whether approval is required (Fig. 18: step S129). For example, in the reception information category column of the organization table of Fig. 3, a judgment is made as to whether it is stipulated that approval is required for reception. In case approval is not required and the advertisement is such that reception disapproval is not stipulated in the reception information category column, the processing proceeds to step S145. In case the advertisement is such that reception disapproval is stipulated, the organization is deleted from the provisionally determined organization of the provision destination in the provided information table (Fig. 11). If approval is required, an approval request mail is transmitted to the organization secretariat (step S131).

The organization secretariat terminal receives the approval request mail including the advertisement content (step S135), and displays it to the person in charge of the affairs of the organization. The person in charge of the affairs or the representative of the organization judges the propriety of provision of the advertisement to the members. Then, he or she causes the organization secretariat terminal to transmit the reply of approval or disapproval to the server 3 (step S137). Incidentally, the reply mail may have such a form that access is made to the server 3 from the URL included in the approval request mail, and input is made in the access destination screen, or may have such a form that a reply is made by an e-mail. The server 3 receives the reply of approval or disapproval from the organization secretariat terminal, and temporarily stores it in the storage device (step S139). Then, the server judges whether it is approval or not (step S141). If the response from the organization secretariat terminal is disapproval, the organization is deleted from the provisionally determined organization of the provision destination in the provided information table (Fig. 11) (step S143).

In the case where approval is not required and in the case where approval is obtained, the server 3 registers the organization, which has been registered as the provisionally determined organization in the provided information table (Fig. 11), as the determined provision destination. Besides, the server stores information concerning the provision destination organization in the information provision history of the information provider table (Fig. 8), and stores information concerning the provided information in the reception history of the organization table (Fig. 3) (step S145). Then, the server delivers the mail advertisement by the mailing list to the determined provision destination organization registered in the provision information table (Fig. 11) in accordance with the set delivery method, or put the banner advertisement on the homepage of the organization (step S147).

Incidentally, the provided information table (Fig. 11), the member table (Fig. 4), the information provider table (Fig. 8) and the organization table (Fig. 3) are provided in database managed by the server 3.

If doing so, the advertiser can easily find out the organization with lively activity in the server 3 on the basis of the number of substantial users, and further, can find out a more suitable advertisement provision destination by combining a category of the organization and/or a keyword.

The embodiment described above is a mere example, and various modifications can be made. For example, although the member of the organization logs in by using the ID and the password in order to grasp the utilization status, for example, a cookie may be used to grasp the access or the like. Besides, in the processing flow shown in Fig. 6, it is also possible for the organization itself not to perform such a processing as to select information such as advertisement to deliver it to the members. The screen examples described above are mere examples, and other structures having the same content may be adopted. As for the category of the organization may be such that more kinds may be selected, or the kinds of categories may be decreased.

In Fig. 7, in order to perform the registration of the information provision content and the search of the information provision destination, first, the provision method (delivery method) is selected, and then, the registration of the specific information provision content and the search condition of the information provision destination are inputted, however, the provision method may be selected on the registered provider menu page, or may be designated on a screen for inputting the registration of the specific information provision content and the search condition of the information provision destination.

In Fig. 12, although the provision destination organization is further selected from the organization list by categories, it is also possible to handle only the provision destination extracted by the provision destination extraction processing at the step S101. According to circumstances, the provision destination organization may be selected from only the organization list by categories.

In Figs. 16 and 17, although the advertisement fee is not displayed, the server 3 may generate the screen information so as to display the advertisement fee for each organization and in total, and may transmit it to the advertiser terminal.

Incidentally, in the above description, although the number of substantial users is counted for the members of the organization, as long as an advertisement medium is such that the number of substantial users can be counted, a suitable advertisement provision destination can be extracted using a similar method.

A program for executing the processing described above is installed in the server 3, and the program may be stored in a storage medium or a storage device and may be delivered. The intermediate data is stored in the storage device such as a main memory of the server 9. Besides, the program may be delivered through the network. Incidentally, that the screen information including the input column is transmitted has a meaning to prompt the user as the receiver to make an input.

### [Industrial Applicability]

As described above, it is possible to provide a technique, which enables an advertiser to search for an advertisement provision destination, which meets a budget condition and is expected to have a high effect.

## Claims

1. A method for processing advertisement destination determination, comprising:
a step of receiving information concerning an advertisement budget condition from an advertiser terminal;
a counting step of counting and storing into a storage device, a number of substantial users for each advertisement provision candidate; and
a step of extracting and transmitting to said advertiser terminal, said advertisement provision candidates within a range of said advertisement budget condition obtained, in descending order of said number of substantial user.

2. The method as set forth in claim 1, further comprising the steps of:
receiving a search condition concerning a property of said advertisement provision candidate from said advertiser terminal; and
narrowing said advertiser provision candidates based on said search condition concerning said property of said advertisement provision candidate.

3. The method as set forth in claim 1, further comprising a step of calculating and transmitting to said advertiser terminal, an advertisement fee based on said number of substantial users.

4. The method as set forth in claim 1, further comprising a step of collecting and storing into said storage device, data concerning utilization status of users for each said advertisement provision candidate, and **characterized in that** said counting step is a step of counting and storing into said storage device, a number of substantial users for each said advertisement provision candidate, based on said data concerning said utilization status.

5. The method as set forth in claim 4, **characterized in that** said advertisement provision candidates are organizations having a predetermined property, and said data concerning said utilization status of said users includes status of accesses to a web page for members by said members of said organization.

6. The method as set forth in claim 5, **characterized in that** said data concerning said utilization status of said users further includes at least either of utilization status of a mailing list and utilization status of a bulletin board by said members of said organization.

7. The method as set forth in claim 1, **characterized in that** said advertisement provision candidates are organizations having a predetermined property, and said method further comprises a step of receiving a condition concerning a counting range of said number of substantial users in said organization from said advertiser terminal, and said counting step is a step of counting a number of substantial users meeting with said condition concerning said counting range for each said advertisement provision candidate.

8. The method as set forth in claim 1, **characterized in that** said advertisement provision candidates are organization having a predetermined property, and said method further comprises a step of narrowing said advertisement provision candidates based on information disclosure status of said organization.

9. The method as set forth in claim 1, further comprising the steps of:
judging whether or not an advertisement provision candidate selected as an advertisement provision destination requires an approval for the advertisement provision; and
if said approval for said advertisement provision is required, transmitting an inquiry as to propriety of said advertisement provision to a representative of said advertisement provision candidate.

10. A method for determining advertisement provision destination, comprising the steps of:
transmitting information concerning an advertisement budget condition to a server; and
receiving from said server and display on a display device, information of advertisement provision candidates extracted in descending order of a number of substantial users within a range of said advertisement budget condition.

11. The method as set forth in claim 10, further comprising a step of transmitting a server a search condition concerning a property of said advertisement provision candidate.

12. The method as set forth in claim 10, further comprising a step of receiving information of an advertisement fee based on said number of substantial users for the extracted advertisement provision candidates.

13. A storage medium storing a program for processing advertisement provision determination, said program causing a computer to execute:
a step of receiving information concerning an advertisement budget condition from an advertiser terminal;
a counting step of counting and storing into a storage device, a number of substantial users for each advertisement provision candidate; and
a step of extracting and transmitting to said advertiser terminal, said advertisement provision candidates within a range of said advertisement budget condition obtained, in descending order of said number of substantial user.

14. The storage medium as set forth in claim 13, wherein said program causes said computer to further execute:
receiving a search condition concerning a property of said advertisement provision candidate from said advertiser terminal; and
narrowing said advertiser provision candidates based on said search condition concerning said property of said advertisement provision candidate.

15. The storage medium as set forth in claim 13, wherein said program causes said computer to further execute a step of calculating and transmitting to said advertiser terminal, an advertisement fee based on said number of substantial users.

16. The storage medium as set forth in claim 13, wherein said program causes said computer to further execute a step of collecting and storing into said storage device, data concerning utilization status of users for each said advertisement provision candidate, and **characterized in that** said counting step is a step of counting and storing into said storage device, a number of substantial users for each said advertisement provision candidate, based on said data concerning said utilization status.

17. The storage medium as set forth in claim 16, **characterized in that** said advertisement provision candidates are organizations having a predetermined property, and said data concerning said utilization status of said users includes status of accesses to a web page for members by said members of said organization.

18. The storage medium as set forth in claim 17, **characterized in that** said data concerning said utilization status of said users further includes at least either of utilization status of a mailing list and utilization status of a bulletin board by said members of said organization.

19. The storage medium as set forth in claim 13, **characterized in that** said advertisement provision candidates are organizations having a predetermined property, and said program causes said computer to further execute a step of receiving a condition concerning a counting range of said number of substantial users in said organization from said advertiser terminal, and said counting step is a step of counting a number of substantial users meeting with said condition concerning said counting range for each said advertisement provision candidate.

20. The storage medium as set forth in claim 13, wherein said advertisement provision candidates are organization having a predetermined property, and said program causes said computer to further execute a step of narrowing said advertisement provision candidates based on information disclosure status of said organization.

21. The storage medium as set forth in claim 13, wherein said program causes said computer to further execute the steps of:
judging whether or not an advertisement provision candidate selected as an advertisement provision destination requires an approval for the advertisement provision; and
if said approval for said advertisement provision is required, transmitting an inquiry as to propriety of said advertisement provision to a representative of said advertisement provision candidate.

22. A computer system, comprising:
means for receiving information concerning an advertisement budget condition from an advertiser terminal;
counting means for counting and storing into a storage device, a number of substantial users for each advertisement provision candidate; and
means for extracting and transmitting to said advertiser terminal, said advertisement provision candidates within a range of said advertisement budget condition obtained, in descending order of said number of substantial user.

23. The computer system as set forth in claim 22, further comprising:
means for receiving a search condition concerning a property of said advertisement provision candidate from said advertiser terminal; and
means for narrowing said advertiser provision candidates based on said search condition concerning said property of said advertisement provision candidate.

24. The computer system as set forth in claim 22, further comprising means for calculating and transmitting to said advertiser terminal, an advertisement fee based on said number of substantial users.

25. The computer system as set forth in claim 22, further comprising means for collecting and storing into said storage device, data concerning utilization status of users for each said advertisement provision candidate, and **characterized in that** said counting means includes means for counting and storing into said storage device, a number of substantial users for each said advertisement provision candidate, based on said data concerning said utilization status.

26. The computer system as set forth in claim 25, **characterized in that** said advertisement provision candidates are organizations having a predetermined property, and said data concerning said utilization status of said users includes status of accesses to a web page for members by said members of said organization.

27. The computer system as set forth in claim 26, **characterized in that** said data concerning said utilization status of said users further includes at least either of utilization status of a mailing list and utilization status of a bulletin board by said members of said organization.

28. The computer system as set forth in claim 22, **characterized in that** said advertisement provision candidates are organizations having a predetermined property, and said computer system further comprises means for receiving a condition concerning a counting range of said number of substantial users in said organization from said advertiser terminal, and said counting means includes means for counting a number of substantial users meeting with said condition concerning said counting range for each said advertisement provision candidate.

29. The computer system as set forth in claim 22, wherein said advertisement provision candidates are organization having a predetermined property, and said computer system further comprises means for narrowing said advertisement provision candidates based on information disclosure status of said organization.

30. The computer system as set forth in claim 22, further comprising:
means for judging whether or not an advertisement provision candidate selected as an advertisement provision destination requires an approval for the advertisement provision; and
means for transmitting, if said approval for said advertisement provision is required, an inquiry as to propriety of said advertisement provision to a representative of said advertisement provision candidate.
